# EUROPEAN PATENT SPECIFICATION

(11) **EP 1 674 237 B1**
(45) Date of publication and mention of the grant of the patent: **12.10.2011**
(21) Application number: 04792312.3
(22) Date of filing: 13.10.2004
(51) Int. Cl.: B29C 47/92, B29C 47/36, B29C 49/04, B29C 47/08

(54) **PROCESS FOR PRODUCING MULTILAYER STRUCTURE**
VERFAHREN ZUR HERSTELLUNG EINER MEHRLAGIGEN STRUKTUR
PROCEDE DE PRODUCTION D'UNE STRUCTURE MULTICOUCHE

(30) Priority: 14.10.2003 JP 2003353790
(43) Date of publication of application: 28.06.2006
(73) Proprietor: The Nippon Synthetic Chemical Industry Co., Ltd., Osaka-shi, Osaka 531-6029 (JP)
(72) Inventor: MIYAZUMI, S., THE NIPPON SYNTH. CHEM. IND. CO. LTD, Kurashiki-shi, Okayama 712-8052 (JP); EMOTO, Yoshio, THE NIPPON SYNTH. CHEM. IND. CO.LTD, Kurashiki-shi, Okayama 712-8052 (JP); INOUE, Kaoru, THE NIPPON SYNTH. CHEM. IND. CO. LTD, Ibaraki-shi, Osaka 567-0052 (JP)
(74) Representative: TBK
(86) International application number: PCT/JP2004/015071
(87) International publication number: WO 2005/035223

(56) References cited:
- EP-A1- 1 036 652
- EP-A2- 1 108 744
- JP-A- 6 285 955
- JP-A- 9 323 345
- JP-A- 10 016 024
- JP-A- 2002 052 659
- JP-A- 2002 307 506
- JP-A- 2003 192 016
- US-A1- 2001 025 072

## Description

### TECHNICAL FIELD

The present invention relates to a process for preparing a multilayer structure product (laminated product) comprising a saponified ethylene/vinyl acetate copolymer (hereinafter, referred to as EVOH in abbreviation) by extrusion molding. More specifically, the present invention relates to a process for preparing a multilayer structure product in which it becomes possible to obtain a satisfactory molded article quickly after restarting the molding without using a special purging agent.

### BACKGROUND ART

Conventionally, EVOH is used by molding into a packaging film and a container for food etc, and a gasoline tank since EVOH is excellent in gas barrier property and solvent barrier property.

However, in molding thereof, in the case of carrying out melt-molding and once ceasing the operation of a molding machine (melt-extrusion apparatus) for a long period of time (particularly for at least 4 hours), then restarting the molding again, it is necessary to operate discharging (purging) over a long time in order to remove a gel of EVOH and a decomposed object existing inside the resin flow path in the molding machine, and if the purging is incomplete, streaks are generated in a molded article (product) or mixing a gel and a burn is caused, which results in taking enormous time and loss of the product to obtain a satisfactory product.

Namely, before once ceasing the operation of a molding machine (melt-extrusion apparatus) for a long period of time (particularly for at least 4 hours) after carrying out a molding process, a process of purging the inside of a resin flow path in a molding machine with a purging agent is conventionally adopted, using high-density polyethylene (HDPE), low-density polyethylene (LDPE), linear low-density polyethylene (LLDPE), polystyrene (PS), polypropylene (PP) and the like as the purging agent (purging resin), and in order to shorten the time for purging, a process of employing a purging agent having higher viscosity than EVOH (purged resin), lowering an temperature for extrusion, or increasing the discharging amount is also utilized. However, these processes have problems such that a large amount of a purging agent is required and the operation is complex, also, using a purging agent having higher viscosity than a purged resin shortens a time for substituting a purged agent with a purging agent, however opposingly, at a time for substituting a purging agent with a purged agent when restarting the molding, a gel and a burn caused by the purging agent are continuously generated over a long time, which is a factor to expand loss of the product.

Therefore, in order to solve these drawbacks, it is proposed to employ a purging agent for an EVOH composition such as a purging agent blended with a copolymer such as a polyamide/polyether copolymer, a polyester/polyether copolymer, and a polyamide/polyester/polyether copolymer to EVOH (for example, see JP-A-1-178545), a purging agent blended with a metallic salt in the II group to polyolefin or a blended compound of polyolefin and EVOH (for example, see JP-A-5-279518), a purging agent comprising a resin such as EVOH satisfying a particular melt-viscosity index (melt-index) (for example, see JP-5-269754), and a purging agent comprising a hydrophobic thermoplastic resin and a hydrophilic thermoplastic resin, and a plasticizer of a purged resin (for example, see JP-A-9-277340) as a purging agent.

However, in the purging agent disclosed in JP-A-1-178545, EVOH and a polyamide elastomer are used, thus, the purging agent itself has poor stability, and a gel and a burn are possibly generated during purging. In the purging agent disclosed in JP-A-5-279518, as a result of the detailed studies by the present inventors, a remaining purging agent is admitted in an extruder (on the surface of the metal) after purging, even though a small amount, which possibly causes the generation of a foreign object in the same as the above. Further, the purging agent disclosed in JP-A-5-269754 has a low viscosity during heating (the viscosity becomes extremely low after heating for 300 minutes), which becomes a factor to generate a foreign odor, thus the purging agent is not preferable due to having a problem of possibility to put the odor on the product. The purging agent disclosed in JP-A-9-277340 also has a problem that there is a possibility to contaminate a processing machine due to evaporating a plasticizer. A purging agent which can overcome these drawbacks are desired, however, as long as a purging agent is employed, it is essential to include an operation of switching from EVOH to a purging agent and also an operation of switching from a purging agent to EVOH at restarting melt-molding EVOH, thus the operations becomes complicated, further loss of an equivalent amount of EVOH is caused, and also, since, in reality, not only EVOH but also other resins are combined to be molded into as a multilayer sheet etc in many cases, loss of other resins as well as loss of EVOH are caused until stably molding the multiple layer etc, which is very uneconomical. At this time, a dust containing a purging agent is generated in a large amount, and in the case of utilizing as a recycling material, since the dust contains the purging agent which is a special resin, it can not be recycled due to lowering the impact strength of a bottle and required to be disposed as a waste.

On the other hand, after terminating purging, a heater in a molding machine (die) is off to lower a temperature to around a room temperature, and then raising up the temperature to a processing temperature at a time for restarting the molding is carried out, however, it takes time to raise a temperature again due to the current tendency of jumboization of a molding machine, particularly in a processing machine for molding a large-sized container such as a gasoline tank, therefore, a problem of lowering productivity has appeared.

### DISCLOSURE OF INVENTION

Herein, considering the above-mentioned circumstances, the present inventors intensively carried out studies concerning a molding process, in which it is possible to obtain the product rapidly at restarting the molding without using a special purging agent, in order to mold a multilayer structure product, supplying EVOH and other resins into a melt-molding machine, the present inventors found that a molding process in which EVOH residing in a melt-molding machine is stood to be left at a temperature lower by 0 to 100°C than a processing temperature at melt-molding throughout the period from a melt-molding process conducted for a certain time to restarting the melt-molding process can solve the above-mentioned problem, and the present invention is reached the completion.

In the present invention, the preferable embodiments are that a volume of a saponified ethylene/vinyl acetate copolymer and other resins released from a die slip part throughout the period from ceasing a melt-molding process to restarting the melt-molding process is 2 to 30 % by volume based on the capacity of the die, the EVOH composition comprises 0.001 to 0.5 % by weight of a boron compound calculated by boron conversion, and a melt-viscosity ratio of EVOH is 0.5 to 10. Herein, the melt-viscosity ratio is referred to a ratio (V24/V4) of the melt-viscosity when EVOH is stood to be left for 4 hours under no oxygen at 190°C to the melt-viscosity when EVOH is stood to be left for 24 hours.

### BEST MODE FOR CARRYING OUT THE INVENTION

Hereinafter, the present invention is explained in detail.

EVOH used in the present invention is not particularly limited, but those in which an amount of ethylene is 10 to 70 % by mol (further 20 to 60 % by mol, and particularly, 25 to 50 % by mol), and the saponification degree of a vinyl acetate component is at least 90 % by mol (further at least 95 % by mol and particularly at least 99 % by mol) are preferable. When the amount of ethylene is less than 10 % by mol, barrier property of the molded article at a high humidity and melt moldability decrease, and adversely, when the amount of ethylene is more than 70 % by mol, it becomes difficult to impart barrier property to a molded article. Further, when the saponification degree of a vinyl acetate component is less than 90 % by mol, it is also not preferable since barrier property, thermal stability, moisture resistance and the like are lowered.

Also, the melt flow rate (MFR) (measured at 210°C, having a load of 2160 g, the followings are in the same manner) of the EVOH is not particularly limited, but it is preferably 0.5 to 100 g/10 min (more preferably 1 to 50 g/10 min, and particularly preferably 3 to 35 g/10 min). When the melt flow rate is less than the ranges, the inside of an extruder becomes in a high torque condition at molding and extrusion process tends to be difficult. When the melt flow rate is larger than the ranges, moldability is lowered, which is not preferable since accuracy of the thickness of a layer containing EVOH in a laminate is lowered when the multilayer structure product (the laminate) is molded.

As for the EVOH, those having the melt-viscosity ratio of 0.5 to 10 (further 0.7 to 8) is preferably used, when the melt-viscosity ratio is less than 0.5, it is possible to cause burning and change in colors, or decomposed gas while EVOH is stood to be left in a molding machine, and adversely, when the melt-viscosity ratio is more than 10, it is not preferable since streaks are possibly generated in a molded article over a long time after restarting the molding (resuming molding). Herein, the ratio of melt-viscosity is a ratio of melt-viscosity at being left at 190°C for 4 hours and 24 hours (melt-viscosity after 24 hours/melt-viscosity after 4 hours), and in order to measure the melt-viscosity ratio, a capillary rheometer is used at 190°C, and the polymer is stood to be left at 190°C also in a cylinder of the capillary rheometer, and the melt-viscosity ratio can be measured by using "Flow Tester CFT500C" available from Shimadzu Corporation as an apparatus, under a capillary radius of 1 mm, a capillary length of 10 mm, and a discharge weight of 10 kgf.

The EVOH is obtained by saponification of an ethylene-vinyl acetate copolymer. The ethylene-vinyl acetate copolymer is prepared by known arbitrary polymerization processes, such as solution polymerization, suspension polymerization, and emulsion polymerization, and saponification of the ethylene-vinyl acetate copolymer can be also carried out by known processes.

In the present invention, an ethylenically unsaturated monomer copolymerizable within a range which does not inhibit the effect of the present invention may be copolymerized. Examples of the monomer are: olefins such as propylene, 1-butene and isobutene; unsaturated acids such as acrylic acid, (meth)acrylic acid, crotonic acid, phthalic acid (and its anhydride), maleic acid (and its anhydride) and itaconic acid (and its anhydride) or salts thereof or mono or dialkyl esters having 1 to 18 carbon atoms; acrylamides such as acrylamide, N-alkylacrylamide having 1 to 18 carbon atoms, N,N-dimethylacrylamide, 2-acrylamide-propane sulfonic acid or a salt thereof, and acrylamide-propyldimethylamine or a salt thereof or a quaternary salt thereof; methacrylamides such as methacrylamide, N-alkylmethacrylamide having 1 to 18 of carbon atoms, N,N-dimethylmethacrylamide, 2-methacrylamide-propane sulfonic acid or a salt thereof, and methacrylamide-propyldimethylamine or a salt thereof or a quaternary salt thereof; N-vinyl amides such as N-vinyl-pyrrolidone, N-vinyl-formamide and N-vinyl-acetamide; vinyl cyanides such as acrylonitrile and methacrylonitrile; vinyl ethers such as alkyl vinyl ether having 1 to 18 of carbon atoms, hydroxyalkyl vinyl ether and alkoxyalkyl vinyl ether; halogenated vinyls such as vinyl chloride, vinylidene chloride, vinyl fluoride, vinylidene fluoride and vinyl bromide; vinyl silanes such as trimetoxy vinyl silane; allyl acetate, allyl chloride, allyl alcohol, dimethylallyl alcohol, trimethyl-(3-acrylamide-3-dimethylptopyl)-ammonium chloride, acrylamide-2-methylpropane sulfonic acid. Also, post modification such as urethanation, acetalization and cyanoethylation may be carried out within a range not damaging objects of the present invention.

As EVOH, using at least two different kinds of EVOH is possible, herein by using a blended compound in which amounts of the ethylenes are different by at least 5 % by mol (further 5 to 25 % by mol, and particularly 8 to 20 % by mol), and/or saponification degrees thereof are different by at least 1 % by mol (further 1 to 15 % by mol, and particularly 2 to 10 % by mol), and/or the MFR ratio thereof is at least 2 (further 3 to 20, and particularly 4 to 15), flexibility, heat-moldability, and stability in forming a film are improved while keeping the gas barrier property, thus being useful. A process for preparing at least two different kind of EVOH (blended compound) is not particularly limited, and examples are a process of saponifying after mixing each paste of ethylene-vinyl acetate copolymer before saponification, a process of mixing an alcohol of each EVOH after saponification or a mixture solution of water and an alcohol of each EVOH after saponification, and a process of melt-kneading each EVOH after mixing thereof.

In EVOH used in the present invention, it is preferable to contain acids such as acetic acid and phosphoric acid, and metallic salts such as alkali metals, alkali earth metals and transition metals thereof, in the viewpoints that heat stability, long-run moldability, adhesivity among layers with adhesive resins by using an adhesive agent to be a multilayer film, and moldability at thermal drawing, and particularly, salts of alkali (earth) metals are preferably used in the viewpoint of their excellent effect.

Further, a boron compound is preferably contained in EVOH used in the present invention, the boron compound is preferably contained in an amount of 10 to 5000 ppm (further 20 to 3000 ppm) by boron conversion in the EVOH, when the amount is less than 10 ppm, an amount of EVOH which is purged at restarting the molding tends to be large, and adversely, when more than 5000 ppm, it is not preferable since the appearance of the obtained molded article tends to be poor.

Examples of the boron compound are boric acid or metallic salts thereof, calcium borate, cobalt borate, zinc borate (such as zinc tetraborate, zinc metaborate), aluminum potassium borate, ammonium borate (such as ammonium metaborate, ammonium tetraborate, ammonium pentaborate, ammonium octaborate), cadmium borate (such as cadmium orthoborate, cadmium tetraborate), potassium borate (such as potassium metaborate, potassium tetraborate, potassium pentaborate, potassium hexaborate, potassium octaborate), silver borate (such as silver metaborate, silver tetraborate), copper borate (such as copper (II) borate, copper metaborate, copper tetraborate), sodium borate (such as sodium metaborate, sodium diborate, sodium tetraborate, sodium pentaborate, sodium hexaborate, sodium octaborate), lead borate (such as lead metaborate, lead hexaborate), nickel borate (such as nickel orthoborate, nickel diborate, nickel tetraborate, nickel octaborate), barium borate (such as barium orthoborate, barium metaborate, barium diborate, barium tetraborate), bismuth borate, magnesium borate (such as magnesium orthoborate, magnesium diborate, magnesium metaborate, trimagnesium tetraborate, pentamagnesium tetraborate), manganese borate (such as manganous borate, manganese metaborate, manganese tetraborate), lithium borate (such as lithium metaborate, lithium tetraborate, lithium pentaborate), additionally, borate minerals such as borax, Kernite, Inyoite, Kotoite, Suanite and Szaibelyite. Borax, boric acid and sodium borate (such as sodium metaborate, sodium diborate, sodium tetraborate, sodium pentaborate, sodium hexaborate, sodium octaborate) are preferably used.

Examples of the salts of alkali (earth) metals are; metallic salts of organic acids such as acetic acid, propionic acid, butyric acid, lauric acid, stearic acid, oleic acid and behenic acid of sodium, potassium, calcium and magnesium, or metallic salts of inorganic acids such as sulfuric acid, sulfurous acid, carbonic acid and phosphoric acid of sodium, potassium, calcium, and magnesium. Acetate salts, phosphate salts and hydrogen phosphate salts are preferable. Further, the amount of the metallic salt is preferably 5 to 1000 ppm, (further preferably 10 to 500 ppm, and particularly 20 to 300 ppm) converted to metal content based on EVOH. When the amount of the metallic salt is less than 5 ppm, the effects for containing are not obtained sufficiently and, on the other hand, when the amount is more than 1000 ppm, it is not preferable since when a multilayer film and the like are molded, the appearance of the obtained multilayer film becomes poor. Herein, in the case of containing at least two salts of alkali metals and/or alkali earth metals, the total amount is preferably within the range of the above-mentioned amounts.

A process of containing the above acids and metallic salts thereof, or a boron compound in EVOH is not particularly limited, and examples are (1) a process of bringing a porous precipitate of EVOH having a water content of 20 to 80 % by weight in contact with the aqueous solution of the acid and metallic salts thereof, or a boron compound to be contained, and then drying, (2) a process of containing, the acids and metallic salts thereof, or a boron compound in the homogeneous solution of EVOH (such as water/alcohol solution), then extruding the mixture in a coagulating liquid in a strand shape, subsequently cutting the obtained strand as pellets, and further drying the pellets, and (3) a process of integrally mixing EVOH with, the acids and metallic salts thereof, or a boron compound, and then melt-kneading the mixture by an extruder and the like. Further as a process of containing the acids and metallic salts thereof, an example is a process of neutralizing alkali (such as sodium hydroxide and potassium hydroxide) used in the saponification process in preparing EVOH with acids such as acetic acid and adjusting amounts of acids such as residual acetic acid and alkali metallic salts such as sodium acetate and potassium acetate, which are by-products by a washing treatment. In order to obtain the effects of the present invention more remarkably, the processes (1) and (2) are preferable in the viewpoints of excellent dispersibility of acids and metallic salts thereof.

In the present invention, within a range where the object of the present invention is not damaged, lubricants such as saturated fatty acid amides (such as stearic acid amide), unsaturated fatty acid amides (such as oleic acid amide), bisfatty acid amides (such as ethylenebisstearic acid amide), low molecular weight polyolefins (such as low molecular weight polyethylene and low molecular weight polypropylene having a molecular weight of about 500 to 10000); inorganic salts (for example, hydrotalcite), inorganic salts (such as hydrotalcite), plasticizers (such as aliphatic polyvalent alcohols such as ethyleneglycol, glycerin, and hexanediol), oxygen absorbents [for example, as inorganic oxygen absorbents, examples are reduced iron powders, further, those obtained by adding a water-absorbing substance, and an electrolyte etc thereto, aluminum powders, potassium sulfite, and photocatalyst titanium oxide; as organic compound oxygen absorbents, ascorbic acid, further fatty acid esters and metallic salts thereof, hydroquinone, gallic acid, polyvalent phenols such as a hydroxyl group-containing phenol aldehyde resin, coordinate bonded compounds of a nitrogen-containing compound with a transition metal such as bis(salicylaldehyde)iminecobalt, tetraethylenepentaminecobalt, cobalt-Schiff base complexes, porphyrins, macrocyclic polyamine complexes and polyethyleneimine-cobalt complexes, terpene compounds, a reaction product of amino acids with a hydroxyl group-containing reductive substance and triphenylmethyl compounds; as the polymeric oxygen absorbents, a coordinate bonded compound of a nitrogen-containing resin with a transition metal (such as a combination of methaxylenediamine and cobalt), a blended product of a tertiary hydrogen-containing resin with a transition metal (such as a combination of polypropylene oligomer and cobalt), the blended product of a carbon-carbon unsaturated bond-containing resin with a transition metal (such as a combination of butadiene oligomer and cobalt), anthraquinone compounds, (for example, a combination of polyvinyl anthraquinone) and the like, and further, those obtained by adding a photo-initiator (such as benzophenone), a peroxide capturing agent (such as a commercially available antioxidant), and a deodorant (such as active carbon) thereto], a heat stabilizer, a photo-stabilizer, an antioxidant, an ultraviolet ray absorber, an colorant, an antistatic agent, a surfactant, an antibiotic, an antiblocking agent (such as talc fine particles), a slipping agent (such as amorphous silica), and a filler (such as an inorganic filler) may be added to EVOH before the molding process or during the molding process.

When a multilayer structure product is molded supplying into a melt-molding machine having a die by using EVOH (composition) such as the above described one together with other resins, the present invention is most characterized in that EVOH residing in the melt-molding machine is stood to be left at a temperature lower by 0 to 100°C than a melt-molding temperature throughout the period after conducting the melt-molding process for a certain time until restarting the melt-molding process. The molding process is explained in the following.

A molding machine used in the present invention is not particularly limited, and a melt-molding machine equipped with a die may be used. As for the melt-molding machine, a multi-screw extruder such as a single-screw, a twin-screw, and a quadra-screw extruder can be used, and as for the die, examples such as a T-die, a circular die and a blow-molding die may be used.

A processing temperature of EVOH is preferably set at 200 to 270°C (further 210 to 250°C, and particularly 220 to 240°C), and when it is less than 200°C, the thickness of the layer may be uneven since EVOH does not flow smoothly, and adversely, when it is more than 270°C, there is a possibility to cause generation of a decomposed gas and coloration.

In the present invention, multi-layer melt-molding is carried out on EVOH at first by a conventionally kwon process adopting the above described conditions. For example, by using a blow bottle molding machine equipped with a multi layer downward circular die having 30 to 200 mmφ on the tip of plural single-screw extruders equipped with a screw having L/D of 20 to 40, C.R. (screw's compression ratio) of 1.5 to 6.0, and 15 to 120 mmφ, EVOH is supplied into at least one extruder among the extruders, other resins (thermoplastic resins) besides the EVOH are supplied into other extruders, the temperatures in the extruders and the dies are set at 190 to 280°C, and molding a multilayer bottle can be carried out in a discharge amount of 0.5 to 500 kg/hr at the screw rotation number of 10 to 100 rpm. The EVOH residing in the molding machine is stood to be left without discharging (purging) throughout the period after forming a film (continuous melt-molding) for a certain time until restarting the melt-molding again.

Herein, the set temperature in the molding machine at that time is lower by 0 to 100°C (further 0 to 80°C, and particularly 0 to 50°C) than a processing temperature during the melt-molding, and EVOH is stood to be left for at least 4 hours (further 4 to 100 hours, and particularly 8 to 80 hours). When the temperature of the EVOH is higher than the processing temperature at this time, it takes a lot of time to purge since burning and a decomposed gas are generated in the residing EVOH and the resins are colored. Adversely also when the EVOH is stood to be left at a temperature lower than the processing temperature, which exceeds 100°C, it takes a lot of time to purge at restarting the molding due to the generation of burning and a decomposed gas at heating again and increase of the resin viscosity, and also streaks tend to be easily generated at restarting the molding, thus it becomes difficult to achieve the effects of the present invention.

In the present invention, a leaving temperature for other resins except for EVOH is not particularly limited.

Also, it is preferable to maintain a discharge amount of the EVOH in a die of at most a certain amount during the leaving period (usually for at least 4 hours, further for 5 to 100 hours, and particularly for 10 to 60 hours) from the viewpoint that a time for restarting the molding can be shortened.

Namely, a discharge amount of EVOH outside the die during the period of being left is adjusted to be 2 to 30 % (further for 5 to 25 %, and particularly 10 to 20 %) based on the EVOH amount in the die. When the discharge amount is more than 30 %, it is required to take a lot of time to purge since streaks are largely generated at restarting the molding due to occurring burning in the die, and adversely when the discharge amount is less than 2 %, it is not preferable since it takes a lot of time to purge due to occurring burning at the lip part in the die.

As for a process for maintaining the discharge amount, there is no particular limitation, however, a process in which changes in the melt-viscosity in an each temperature of an each resin are comprehend and adjusting a leaving temperature corresponding to the changes lower than a processing temperature by 0 to 100°C or directly, a process of applying a plate for inhibiting flowing at the lip part in the die only during the period of being left and the like may be used.

In the present invention, as for other resins used in a layer other than the EVOH layer, which is useful in molding a multilayer structure product containing the EVOH layer, examples are polyolefin resins such as: homopolymer or copolymers of an olefin such as a linear low density polyethylene, a low density polyethylene, an ultra low density polyethylene, a middle density polyethylene, a high density polyethylene, an ethylene-vinyl acetate copolymer, an ionomer, an ethylene-propylene copolymer, an ethylene-acrylic acid ester copolymer, polypropylene, a propylene-α-olefin copolymer (α-olefin having 4 to 20 carbons), polybutene and polypentene, or polyolefin resins in broad definition such as those obtained by graft-modifying homopolymers or copolymers of an olefin with unsaturated carboxylic acid or its ester, polyester, polyamide, copolymerized polyamide, polyvinyl chloride, polyvinylidene chloride, an acrylic resin, a polystyrene, a vinyl ester resin, a polyester elastomer, a polyurethane elastomer, chlorinated polyethylene, chlorinated polypropylene, an aromatic or aliphatic polyketone, further, polyalcohols obtained by reducing these, further, other EVOH. Polypropylene, polyamide, polyethylene, an ethylene-vinyl acetate copolymer, polystyrene, polyethylene terephthalate (PET) and polyethylene naphthalate (PEN) are preferably used from the viewpoint of practical utility such as physical properties (especially, strength) of the laminate.

Also, as the structure of the layers in the above described multilayer structure product, thermoplastic resin layers are to be the both outermost layers, referring the EVOH (containing) layer as a and the thermoplastic resin layer as b, the layer structure can not only be b/a/b, but also b/a/b/a/b, and when a regrind layer comprising a mixture of the EVOH composition and the thermoplastic resin is referred to R, the layer structure can be b/R/a/b, b/R/a/R/b, b/a/R/a/b, b/R/a/R/a/R/b and the like, and the layer structure of a/b and b/R/a/b are preferably adopted, and in addition, it is possible to compound the mixture used in the regrind layer and an adhesive resin described later in b of these layer structures according the necessity. Further in these layer structures, an adhesive resin (such as a modified polyolefin resin with carboxylic acid) is used among each layer according to the necessity. Also, a thickness of the each layer depends on uses and a shape of a container, and required physical properties, however, the layer a is approximately 10 to 2000 µm (further 30 to 500 µm), and the layer b is approximately 30 to 10000 µm (further 100 to 5000 µm).

The preparation process of the present invention is useful in molding particularly a container, for example, when a container having the layer structure of the above thermoplastic resin layer/EVOH layer/thermoplastic layer, the process of the present invention may be carried out by supplying the EVOH and the thermoplastic resin into an injection molding machine, a direct-blow molding machine, and an injection blow-molding machine, and a direct-blow molding process is preferably adopted.

When the direct blow-molding is applied in the preparation process of the present invention, there is no particular limitation, but a process for preparing a multilayer bottle, in which a multilayer pipe resin (parison) in which EVOH is to be the middle layer, is extruded with a circular die equipped with at least four extruders in the EVOH layer, the substrate resin layer, the adhesive resin layer, and the recovered resin layer, the obtained parison is pinched with a pair of molds in a shape of a bottle, closed the parison on the top and the bottom, solidified by cooling at the same time pushing into the die by inflating the parison by blowing air in the parison from the blowing inlet is adopted.

The container obtained in this manner is useful for, representatively, a fuel tank such as automobile gasoline, or various containers such as a bottle, a tank and a drum for transportation, storage, and preservation of volatile compounds containing hydrocarbons such as agricultural chemicals, reagents, and kerosene as the main component.

Hereinafter, the present invention is described in detail based on Examples. Further, "parts" and "%" in the examples refer to the basis on weight unless otherwise noticed.

### EXAMPLE 1

Six layers blow molding machine with four extruders was charged with EVOH [ethylene in an amount of 32 % by mol, a degree of saponificaiton of 99.5 % by mol, MFR of 12 g/10 min (210°C, load of 2160 g), a boron compound in an amount of 380 ppm by boron conversion, magnesium acetate in an amount of 180 ppm by magnesium conversion, melt-viscosity ratio of 6], HDPE [high-density polyethylene, "NOVATEC HD HB431" available from Japan Polychem Corporation], and an adhesive resin (maleic anhydride modified high-density polyethylene, "MODIC AP F501" available from Mitsubishi Chemical Corporation), and six layers bottles with four kinds of resin having a layer structure of an HDPE layer/a recovering layer/an adhesive resin layer/an EVOH layer/an adhesive resin layer/an HDPE layer ordered from the outer layer (a thickness at the middle was 70 µm/210 µm/20 µm/100 µm/20 µm/290 µm, a capacity is 500 cc) were molded for 8 hours.

In the blow molding at that time, an extruder for each layer was a single screw extruder having 30 mmφ equipped with a downward circular die having 21 mmφ, in which a resin capacity in the die was 140 cm³, was used. A ratio of an amount of a recovered resin to virgin HDPE was adjusted to be 1 % of an EVOH amount in the recovering layer. Further, a set temperature in an processing machine for each layer was all set at 210°C, and a temperature in a die was also set at 210°C.

After molding for 8 hours, the machine was left to be stood at the set temperature as it was for 8 hours. The resin discharged from the die at this time was 10 % of the die volume. The molding is restarted after that, it became possible to mold into a shape of a bottle after 2 minutes from initiating flowing a resin, and after further 15 minutes, streaks disappeared and a bottle having excellent appearance was able to be obtained.

The whole amount of resin used for purging in this 17 minutes was 3300 g.

As for the obtained 10 bottles, they were filled with 450 cc of water and capped, then dropped from the height of 1m to a concrete floor 50 times, positioning the bottoms of the bottles parallel to the floor at a room temperature. The number of broken bottles was counted and evaluated as follows (impact resistance at dropping).
O: The number of the broken bottles is at most 1
Δ: The number of the broken bottles is 2 to 3
X : The number of the broken bottles is at least 4

### EXAMPLE 2

Example 2 was carried out in the same manner as Example 1, except for setting a temperature to be left at 150°C and an amount of flowing resin was 4 %, the molding was restarted, it became possible to mold into a shape of a bottle after 2 minutes from initiating flowing a resin, and after further 11 minutes, streaks disappeared and a bottle having excellent appearance was able to be obtained.

The whole amount of resin used for purging in this 13 minutes was 3000 g.

The evaluation for the obtained bottles was also carried out in the same manner.

### EXAMPLE 3

Example 3 was carried out in the same manner as Example 1, except for using EVOH having an ethylene content of 32 % by mol, a degree of saponificaiton of 99.5 % by mol, MFR of 12 g/10 min (210°C, load of 2160 g), an amount of a boron compound of 380 ppm by boron conversion, an amount of magnesium acetate of 250 ppm by magnesium conversion, the melt-viscosity ratio of 4 and setting an discharge amount of resin was 35 %, then the molding was restarted, it became possible to mold into a shape of a bottle after 4 minutes from initiating flowing a resin, and after further 21 minutes, streaks disappeared and a bottle having excellent appearance was able to be obtained.

The whole amount of resin used for purging in this 25 minutes was 5500 g.

The evaluation for the obtained bottles was also carried out in the same manner.

### EXAMPLE 4

The resin flow was suppressed by applying a plate to the lip part in the die after stopping. The discharge amount of resin at that time was 12 %. The molding was restarted in the same manner, and it became possible to mold into a shape of a bottle after 2 minutes from initiating flowing a resin, and after further 15 minutes, streaks disappeared and a bottle having excellent appearance was able to be obtained.

The whole amount of resin used for purging in this 17 minutes was 3700 g.

The evaluation for the obtained bottles was also carried out in the same manner.

### EXAMPLE 5

Example 5 was carried out in the same manner as Example 1, except that a processing temperature was set at 230°C, stood to be left at the processing temperature, and an amount of flowing resin was 15 %, then the molding was restarted, it became possible to mold into a shape of a bottle after 3 minutes from initiating flowing a resin, and after further 15 minutes, streaks disappeared and a bottle having excellent appearance was able to be obtained.

The whole amount of resin used for purging in this 18 minutes was 4000 g.

The evaluation for the obtained bottles was also carried out in the same manner.

### EXAMPLE 6

Example 6 was carried out in the same manner as Example 1, except that a leaving time was 5 hours and an discharge amount of resin is 7 %, the molding was restarted, it becomes possible to mold into a shape of a bottle after 2 minutes from initiating flowing a resin, and after further 10 minutes, streaks disappeared and a bottle having excellent appearance can be obtained.

The whole amount of resin used for purging in this 12 minutes was 2600 g.

The evaluation for the obtained bottles are also carried out in the same manner.

### EXAMPLE 7

Example 7 was carried out in the same manner as Example 1, except for using EVOH having an ethylene content of 32 % by mol, a degree of saponification of 99.5 % by mol, MFR of 12 g/10 min (210°C, load of 2160 g), an amount of magnesium acetate of 180 ppm by magnesium conversion, the melt-viscosity ratio of 2 and setting a discharge amount of resin of 35 %, then the molding was restarted, it became possible to mold into a shape of a bottle after 5 minutes from initiating flowing a resin, and after further 20 minutes, streaks disappeared and a bottle having excellent appearance was able to be obtained.

The whole amount of resin used for purging in this 25 minutes was 5500 g.

The evaluation for the obtained bottles was also carried out in the same manner.

### COMPARATIVE EXAMPLE 1

After purging an extruder in the EVOH layer before terminating with a commercially available polypropylene ("NOVATEC LD LF542H" available from Japan Polychem Corporation.) in Example 1, a temperature in the processing machine was lowered to a room temperature, EVOH was charged into the extruder in the EVOH layer, then restarting the molding, it was required to take 20 minutes to be able to mold into a shape of a bottle from initiating flowing a resin in the whole layers, and it further took 50 minutes to disappear the streaks and obtain a bottle having excellent appearance.

The whole amount of resin used for purging in this period of time was 16000 g.

The evaluation for the obtained bottles was also carried out in the same manner.

### COMPARATIVE EXAMPLE 2

Comparative Example 2 was carried out in the same manner as Example 1, except for setting a temperature in the die at being left after terminating the molding after terminating the molding at 230°C, and the molding was restarted, it was required to take 7 minutes to be able to mold into a shape of a bottle from initiating flowing a resin, and it further took 30 minutes to disappear the streaks and obtain a bottle having excellent appearance.

The whole amount of resin used for purging in this 42 minutes was 9500 g.

The evaluation for the obtained bottles was also carried out in the same manner.

### COMPARATIVE EXAMPLE 3

Comparative Example 3 was carried out in the same manner as Example 1, except for setting a temperature in the die at being left after terminating the molding at 80°C, then the molding was restarted, it was required to take 10 minutes to be able to mold into a shape of a bottle from initiating flowing a resin, and it further took 30 minutes to disappear the streaks and obtain a bottle having excellent appearance.

The whole amount of resin used for purging in this period of time was 9000 g.

The evaluation for the obtained bottles was also carried out in the same manner.

The evaluation results of the bottles in Examples and Comparative Examples are shown in Table 1.

**TABLE 1**

| | Impact resistance at dropping |
|---|---|
| Ex.1 | ○ |
| Ex.2 | ○ |
| Ex.3 | ○ |
| Ex.4 | ○ |
| Ex. 5 | ○ |
| Ex.6 | ○ |
| Ex.7 | ○ |
| Com. Ex.1 | × |
| Com.Ex.2 | Δ |
| Com.Ex.3 | Δ |

### INDUSTRIAL APPLICABILITY

According to the process for preparing the multilayer structure product of the present invention, it becomes possible to obtain an satisfactory molded article rapidly after restarting the molding without using a special purging agent. Therefore, the process for preparing the multilayer structure product of the present invention is useful for various moldings, particularly for blow molding, which is useful at molding a container for fuel such as a gasoline tank.

Further, in the process for preparing the multilayer structure product of the present invention, a time for increasing the temperature at restarting the molding can be saved without using a special purging agent, and EVOH remained in a molding machine is utilized as it is after initiating re-molding, even though a part thereof may be disposed, and the impact resistance of the obtained molded article is not lowered.

## Claims

1. A process for preparing a multilayer structure product comprising a step of feeding a saponified ethylene/vinyl acetate copolymer and other resins to a melt-molding machine having a die and a step of leaving the saponified ethylene/vinyl acetate copolymer residing in the melt-molding machine at a temperature lower by 0 to 100°C than a melt-molding temperature throughout the period from ceasing a melt-molding process after conducting the melt-molding process for a certain time to restarting the melt-molding process.

2. The process for preparing a multilayer structure product of Claim 1, wherein a volume of a saponified ethylene/vinyl acetate copolymer and other resins released from a die slip part throughout the period from ceasing a melt-molding process to restarting the melt-molding process is 2 to 30 % by volume based on the capacity of the die.

3. The process for preparing a multilayer structure product of Claim 1 or 2, wherein the saponified ethylene/vinyl acetate copolymer comprises 10 to 5000 ppm of a boron compound calculated by boron conversion.

4. The process for preparing a multilayer structure product of Claim 1, 2 or 3, wherein a melt-viscosity ratio of the saponified ethylene/vinyl acetate copolymer, i.e. the viscosity after standing at 190°C for 4 hours to the viscosity after standing at 190°C for 24 hours, is 0.5 to 10.

5. The process for preparing a multilayer structure product of Claim 1, 2, 3 or 4, wherein the multilayer structure product is a container for fuel.

6. The process for preparing a multilayer structure product of Claim 1, 2, 3, 4 or 5, wherein the molding process is direct-blow molding.

## Patentansprüche

1. Verfahren zur Herstellung eines Multischichtstrukturprodukts, das umfasst einen Schritt des Beschickens eines verseiften Ethylen/Vinylacetatcopolymers und anderer Harze zu einer Schmelzformmaschine mit einer Pressform und einen Schritt des Austretens des verseiften Ethylen/Vinylacetatcopolymers, das in der Schmelzformmaschine bei einer Temperatur, die um 0 bis 100°C geringer als eine Schmelzformtemperatur ist, anwesend ist, während des Zeitraums vom Beenden eines Schmelzformverfahrens nach dem Durchführen des Schmelzformverfahrens für eine gewisse Zeit bis zum Wiederaufnehmen des Schmelzformverfahrens.

2. Verfahren zur Herstellung eines Multischichtstrukturprodukts nach Anspruch 1, wobei ein Volumen eines verseiften Ethylen/Vinylacetatcopolymers und anderer Harze, das von einem Pressform-Rutsch-Teil während des Zeitraums vom Beenden eines Schmelzformverfahrens bis zum Wiederaufnehmen des Schmelzformverfahrens abgegeben wird, 2 bis 30 Volumen-% basierend auf der Kapazität der Pressform ist.

3. Verfahren zur Herstellung eines Multischichtstrukturprodukts nach Anspruch 1 oder 2, wobei das verseifte Ethylen/Vinylacetatcopolymer 10 bis 5000 ppm einer Borverbindung berechnet über Borumrechnung umfasst.

4. Verfahren zur Herstellung eines Multischichtstrukturprodukts nach Anspruch 1, 2 oder 3, wobei ein Schmelzviskositätsverhältnis des verseiften Ethylen/Vinylacetatcopolymers, i.e. die Viskosität nach Stehen bei 190°C für 4 Stunden zu der Viskosität nach Stehen bei 190°C für 24 Stunden, 0,5 bis 10 ist.

5. Verfahren zur Herstellung eines Multischichtstrukturprodukts nach Anspruch 1, 2, 3 oder 4, wobei das Multischichtstrukturprodukt ein Container für Kraftstoff ist.

6. Verfahren zur Herstellung eines Multischichtstrukturprodukts nach Anspruch 1, 2, 3, 4 oder 5, wobei das Schmelzverfahren Direktblasformen ist.

## Revendications

1. Procédé de préparation d'un produit à structure multicouches comprenant une étape d'alimentation d'un copolymère éthylène/ vinylacétate saponifié et d'autres résines à une machine de moulage en fusion possédant une matrice et une étape consistant à laisser le copolymère éthylène/acétate vinylique saponifié résidant dans la machine de moulage en fusion à une température inférieure de 0 à 100°C à un procédé de moulage en fusion après l'exécution d'un procédé de moulage en fusion pendant un certain temps pour redémarrer le procédé de moulage en fusion.

2. Procédé de préparation d'un produit à structure multicouches selon la revendication 1, dans lequel un volume d'un copolymère éthylène/ vinylacétate saponifié et d'autres résines, libéré d'une pièce coulissante de la matrice durant toute la période entre l'interruption d'un procédé de moulage en fusion et le redémarrage du procédé de moulage en fusion, est de 2 à 30% en volume sur la base de la capacité de la matrice.

3. Procédé de préparation d'un produit à structure multicouches selon l'une des revendications 1 ou 2, dans lequel le copolymère éthylène/vinylacétate saponifié comprend 10 à 5000 ppm d'un composé de bore calculé par conversion du bore.

4. Procédé de préparation d'un produit à structure multicouches selon l'une des revendications 1, 2 ou 3, dans lequel un rapport de viscosité en fusion du copolymère éthylène/vinylacétate saponifié, c'est-à-dire la viscosité après maintien à 190°C pendant 4 heures par rapport à la viscosité après maintien à 190°C pendant 24 heures, est de 0,5 à 10.

5. Procédé de préparation d'un produit à structure multicouches selon l'une des revendications 1, 2, 3 ou 4, dans lequel le produit à structure multicouches est un conteneur pour carburant.

6. Procédé de préparation d'un produit à structure multicouches selon l'une des revendications 1, 2, 3, 4 ou 5, dans lequel le procédé de moulage est un moulage par soufflage direct.
